# EUROPÄISCHE PATENTANMELDUNG

(11) **EP 0 899 179 A1**
(43) Veröffentlichungstag der Anmeldung: **03.03.1999**
(21) Anmeldenummer: 98114695.4
(22) Anmeldetag: 05.08.1998
(51) Int. Cl.: B62B 3/18

(54) **Behälter zum Einsetzen in einen Korb, insbesondere in den Korb eines von Hand fahrbaren Wagens, z.B. eines Einkaufwagens**

(30) Priorität: 27.08.1997 DE 19737314
(71) Anmelder: Häussler, Hans-Martin, 89428 Syrgenstein (DE); Häussler, Rainer, 89428 Syrgenstein (DE)
(72) Erfinder: Häussler, Hans-Martin, 89428 Syrgenstein (DE)
(74) Vertreter: Dr. Weitzel & Partner

(57) **Zusammenfassung**

Der Behälter ist als Beutel (2) aus knautschbarem Material, insbesondere aus Stoff, ausgebildet. Der Beutel weist wenigstens einen Stab (2.1,2.2) auf, der sich im Bereich der Kante der Beutelöffnung befindet. Wenigstens ein Stab greift in eingehängtem Zustand mit seinen beiden Enden an zwei gegenüberliegenden Wänden des Korbes an. Wenigstens ein angreifender Stab ist teleskopierbar und mittels einer oder mehrerer Federn mit den genannten Wänden zwecks Fixieren seiner Lage verspannbar.

## Beschreibung

Die Erfindung betrifft einen Behälter zum Einsetzen in einen Korb, insbesondere in den Korb eines Wagens, insbesondere eines Einkaufswagens.

Es sind zahlreiche Behälter zum Einsetzen in Einkaufswagen aus der Literatur bekanntgeworden. Nur beispielsweise wird verwiesen auf DE 40 10 264 A1. Darin ist ein Einkaufswagen beschrieben, auf den ein Tragbehälter eingesetzt werden kann. Der Tragbehälter ist von starrer, kastenförmiger Konstruktion.

DE 196 02 375 A1 beschreibt einen Einkaufswagen mit in diesen einsetzbarer Tasche, die unter anderem aus Stoff bestehen kann und die dazu bestimmt ist, die Einkäufe aufzunehmen.

Weiterer Stand der Technik ist bekanntgeworden aus FR 2 658 146 sowie US 4 813 701.

Die bisher bekannten Behälter zur Aufnahme von Gegenständen, z.B. von Einkäufen, soweit zum Aufsetzen oder Einsetzen in die Körbe fahrbarer Wagen bestimmt, haben verschiedene Nachteile. Soweit es sich hierbei um starre, kastenförmige Behälter handelt, so sind diese wenig geeignet, da sperrig. Soweit im Stande der Technik etwas von Stoffbehältern erwähnt ist, bleibt die Frage offen, auf welche Weise ein solcher Behälter in den Korb des Wagens eingesetzt und darin gehalten wird.

Der Erfindung liegt die Aufgabe zugrunde, einen Behälter zum Einsetzen in den Korb eines von Hand fahrbaren Wagens, insbesondere eines Einkaufswagens zu schaffen, der derart gestaltet ist, daß er leicht und zuverlässig mit dem Korb des Wagens verbindbar, aber auch wieder entnehmbar ist.

Diese Aufgabe wird durch die Merkmale von Anspruch 1 gelöst.

Die Erfinder haben sich somit für einen Beutel aus einem knautschbaren Material, insbesondere aus Stoff, entschieden. Durch die Anordnung wenigstens eines teleskopierbaren Stabes als Bestandteil des Beutels an dessen Öffnungskante läßt sich der genannte Stab leicht und schnell mit dem Korb des Wagens verspannen und damit bezüglich seiner Lage fixieren. Zweckmäßigerweise wird man zwei Stäbe verwenden, die parallel zueinander angeordnet sind. Wenigstens einer dieser Stäbe ist hierbei teleskopierbar und durch Federkraft gegen die betreffenden, einander gegenüberliegenden Wände des Korbes des Wagens verfahrbar.

Die Erfindung ist insbesondere anwendbar auf Einkaufswagen. Gerade dort ist es wünschenswert, den Beutel derart einhängen zu können, daß er während des Fahrens nicht beliebig im Wagen hin- und herrutscht. Insbesondere dann, wenn zwei Stäbe vorgesehen sind, die teleskopierbar durch Federkraft gegen die Wagenwände verspannbar sind, kann die Hausfrau beim Einkauf die beiden Stäbe nach dem Einlegen von Einkaufsgut in den Beute derart dicht aneinanderrücken, daß die Beutelöffnung versperrt ist für unbefugten Zugriff. In diesem Falle kann die einkaufende Person auch Wertgegenstände wie Geldbörsen oder dergleichen im Beute aufbewahren.

Es ist auch denkbar, wenigstens einen der Stäbe an einem seiner beiden Enden mit einer Verriegelung zu versehen, beispielsweise einer Klaue, die in das Gitter des Korbes eingreift. Hierdurch wird sichergestellt, daß der Einkaufsbeutel, der möglicherweise eine Geldbörse enthält, nicht durch Unbefugte aus dem Korb des Einkaufswagens herausgenommen wird.

Die Kombination aus Teleskopierbarkeit und Federkraft erlaubt es unter anderem, den erfindungsgemäßen Beute für jede Art von Wagen zu verwenden, ungeachtet von dessen Abmessungen. Das genannte Kombinationsmerkmal - Teleskopierbarkeit und Federkraft - ist besonders sinnvoll im Hinblick darauf, daß sich Einkaufswagen im allgemeinen - in Draufsicht gesehen und in Fahrtrichtung - verjüngen. Durch das Kombinationsmerkmal kann der Beutel in jeder beliebigen Position in dem Korb des Einkaufswagens eingesetzt werden.

Der erfindungsgemäße Beute ist nicht nur zur Aufnahme von Einkäufen und zum Einhängen in Einkaufswagen nützlich, sondern auch für die Verwendung in einer Aktenregistratur oder dergleichen.

Die Erfindung ist anhand der Zeichnungen näher erläutert. Darin ist im einzelnen folgendes dargestellt:
- Fig. 1: zeigt einen Einkaufswagen mit darin eingehängtem Beute.
- Fig. 2: zeigt den Beutel gemäß Fig. 1 in einer Seitenansicht.
- Fig. 3: zeigt den Gegenstand von Fig. 2 in einer vergrößerten Teilansicht.

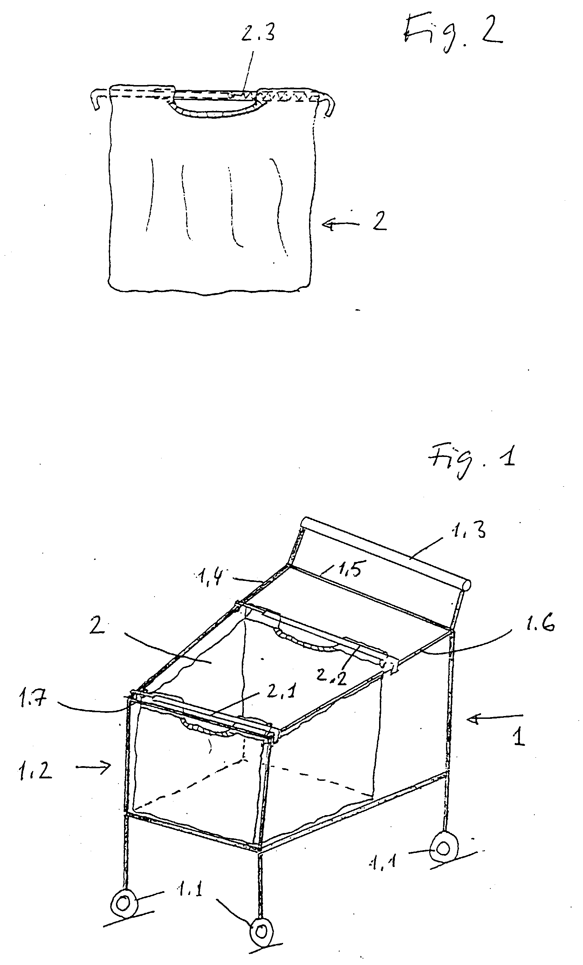

Der in Fig. 1 dargestellte Einkaufswagen 1 weist in bekannter Weise ein Fahrgestell mit Rädern 1.1 sowie einen Korb 1.2 auf, ferner einen Handgriff 1.3.

Der Korb ist in bekannter Weise aus einem Drahtgitter aufgebaut. Eine oben befindliche Öffnung ist von Stäben 1.4, 1.5, 1.6 und 1.7 gebildet.

In den Korb 1.2 ist ein Beute 2 eingehängt. Der Beute weist im Bereich seiner Öffnung zwei Stäbe 2.1 und 2.2 auf. Das Beutelmaterial ist im vorliegenden Falle Stoff. Es könnte auch aus einem anderen knautschbaren Material bestehen, beispielsweise aus plissiertem Leder oder einer Kombination aus mehreren Materialien.

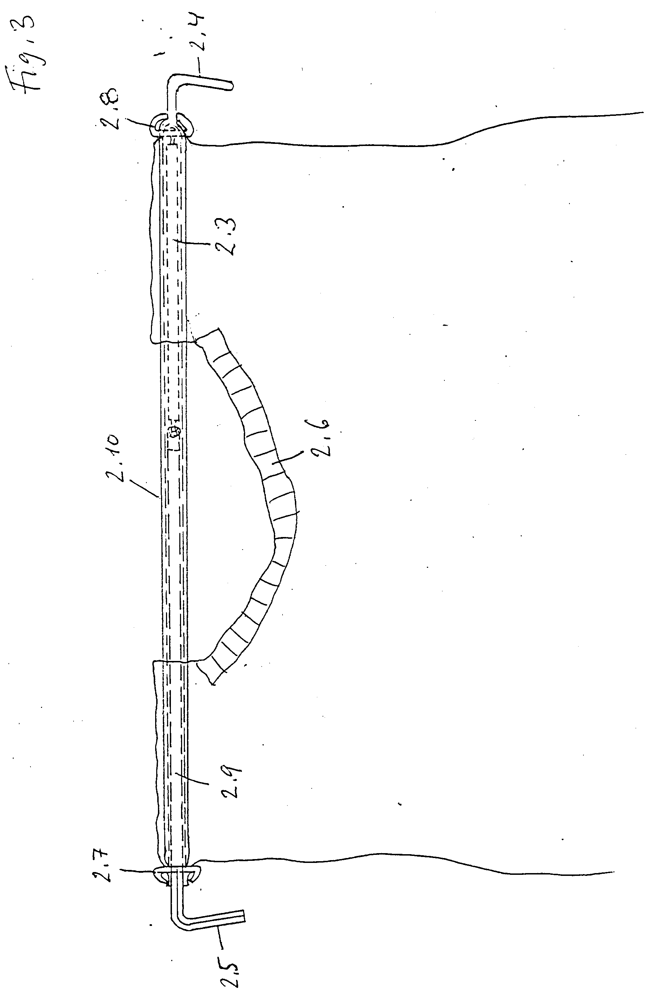

Die beiden Stäbe 2.1 und 2.2 sind teleskopierbar. Dabei umschließt bekannterweise eine Hülse einen in dieser verfahrbaren Schaft. Jeder Stab ist an jedem Ende mit einer Halteklaue oder dergleichen versehen. Dabei ist die eine Halteklaue Bestandteil der Hülse und die andere Halteklaue Bestandteil des Schaftes. Siehe in Fig. 3 die Halteklauen 2.4, 2.5. Die Halteklauen sind dazu bestimmt, in die einander gegenüberliegenden Wände bzw. an den einander gegenüberliegenden Stäben des Korbes 1.2 des Einkaufswagens anzugreifen. Im vorliegenden Falle greifen die Halteklauen 2.4, 2.5 an den einander gegenüberliegenden Stäben 1.4 und 1.6 des Korbes 1.2 an.

Um eine kraftschlüssige Verbindung zwischen Halteklauen einerseits und Stäben andererseits herzustellen, ist eine Feder notwendig. Siehe die Feder 2.3 in Fig. 2. Dort handelt es sich um eine Zugfeder, die die beiden Halteklauen 2.4, 2.5 einander annähern will. Es ist dann eine Zugfeder vorgesehen, wenn die Halteklauen die betreffenden Stäbe übergreifen. Eine alternative Lösung besteht darin, daß das äußere Ende der Hülse und das äußere Ende des Schaftes ganz einfach an der Gitterwand des Korbes 1.2 bzw. an den betreffenden Stäben 1.4, 1.6 innen anliegt. In diesem Falle ist statt der Zugfeder 2.3 eine Druckfeder notwendig.

Wie man aus den Figuren ferner erkennt, weist der Beute 2 jeweils zwei Griffaussparungen 2.6 auf. Im Bereich der Griffaussparung ist der Beutel mit einem Gummizug versehen, der in den Saum der Griffaussparung eingelassen ist.

Das Material des Beutels ist an den beiden Enden eines jeden Stabes befestigt.

Aus Fig. 3 erkennt man zwei Befestigungsösen 2.7 und 2.8. Die Befestigungsöse 2.7 dient zur Befestigung des Stoffes des Beutels 2 und gleichzeitig als Anschlag für den ausziehbaren Schaft. Die Befestigungsöse 2.8 dient ebenfalls für den Stoff des Beutels 2, und gleichzeitig als Halteteil für eine im Inneren der Hülse vorgesehene Zugfeder 2.3.

Eine weitere Besonderheit besteht im vorliegenden Falle darin, daß der Schaft 2.9 gegen die Hülse 2.10 nicht verdrehbar ist. Zu diesem Zwecke ist der Schaft 2.9 aus Sechskantmaterial hergestellt, und die Hülse 2.10 an ihrem einen Ende - dort, wo der Schaft 2.9 herauskommt - ebenfalls innen sechskantförmig.

Die Halteklaue 2.4 kann einteilig mit der Hülse 2.10 sein, in dem sie durch Zusammenquetschen des Endes und durch Abwinkeln unter einem Winkel von ca. 85° hergestellt ist.

Wie man sieht, kann der einzelne Stab auf unterschiedliche Weise aufgebaut sein. So kann er eine einzige Hülse aufweisen, die zwei in ihr teleskopierbare Schäfte umschließt. In diesem Falle sind die herausragenden Enden der Schäfte mit Halteklauen versehen. Alternativ kann aber auch der Stab eine einzige Hülse sowie einen einzigen Schaft umfassen. In diesem Falle ist das äußere Ende der Hülse mit einer Halteklaue zu versehen, und das äußere Ende des Schaftes.

## Patentansprüche

1. Behälter zum Einsetzen in einen Korb (1.2), insbesondere in den Korb (1.2) eines von Hand fahrbaren Wagens (1), z.B. eines Einkaufswagens,
gekennzeichnet durch die folgenden Merkmale:
1.1 der Behälter ist als Beutel (2) aus knautschbarem Material, insbesondere aus Stoff oder aus einer Plastikfolie, ausgebildet;
1.2 der Beute (2) weist wenigstens einen Stab (2.1, 2.2) auf, der sich im Bereich der Kante der Beutelöffnung befindet;
1.3 wenigstens ein Stab (2.1, 2.2) greift in eingehängtem Zustand mit seinen beiden Enden an zwei gegenüberliegenden Wänden des Korbes (1.2) an;
1.4 wenigstens ein angreifender Stab (2.1, 2.2) ist teleskopierbar und mittels einer oder mehrerer Federn (2.3) mit den genannten Wänden zwecks Fixieren seiner Lage verspannbar.

2. Behälter nach Anspruch 1, dadurch gekennzeichnet, daß als Federn Zugfedern (2.3) vorgesehen sind.

3. Behälter nach Anspruch 1, dadurch gekennzeichnet, daß als Federn Druckfedern vorgesehen sind.

4. Behälter nach einem der Ansprüche 1 bis 3, dadurch gekennzeichnet daß der Beutel (2) im Bereich des Stabes bzw. der Stäbe Griffaussparungen (2.6) aufweist.

5. Behälter nach einem der Ansprüche 1 bis 7, dadurch gekennzeichnet daß die Oberkante des Beutels (2) wenigstens im Bereich der Griffaussparungen (2.6) einen Gummizug aufweist.

6. Behälter nach Anspruch 5, dadurch gekennzeichnet, daß das Material des Beutels (2) im Bereich von dessen Oberkante an den beiden Ende eines teleskopierbaren Stabes (2.1, 2.2) befestigt ist.

7. Behälter nach einem der Ansprüche 1 bis 6, dadurch gekennzeichnet, daß die elastisch teleskopierbaren Stäbe derart gestaltet sind, daß sie in Fahrtrichtung des Wagens einhängbar sind.

8. Behälter nach einem der Ansprüche 1 bis 6, dadurch gekennzeichnet, daß die elastisch teleskopierbaren Stäbe quer zur Fahrtrichtung des Wagens einhängbar sind.

9. Behälter nach einem der Ansprüche 1 bis 8, dadurch gekennzeichnet, daß jeder teleskopierbare Stab (2.1, 2.2) eine Hülse (2.10) sowie einen in dieser verschiebbaren Schaft (2.9) aufweist.

10. Behälter nach Anspruch 9, dadurch gekennzeichnet, daß Schaft (2.9) und Hülse (2.10) im Verhältnis zueinander drehfest sind.
